# EUROPÄISCHE PATENTSCHRIFT

(11) **EP 3 097 044 B1**
(45) Veröffentlichungstag und Bekanntmachung des Hinweises auf die Patenterteilung: **02.05.2018**
(21) Anmeldenummer: 15702168.4
(22) Anmeldetag: 20.01.2015
(51) Int. Cl.: B66C 19/00, B65G 63/00

(54) **STAPELKRAN MIT CONTAINERZWISCHENLAGERPLATZ**
STACKER CRANE WITH AN INTERMEDIATE STORAGE AREA FOR CONTAINERS
PONT GERBEUR COMPORTANT UN EMPLACEMENT DE STOCKAGE INTERMÉDIAIRE POUR CONTENEURS

(30) Priorität: 21.01.2014 DE 102014100658
(43) Veröffentlichungstag der Anmeldung: 30.11.2016
(73) Patentinhaber: Konecranes Global Corporation, 05830 Hyvinkää (FI)
(72) Erfinder: HEGEWALD, Mike, 40597 Düsseldorf (DE); WIESCHEMANN, Armin, 46119 Oberhausen (DE)
(74) Vertreter: Moser Götze & Partner Patentanwälte mbB
(86) Internationale Anmeldenummer: PCT/EP2015/051027
(87) Internationale Veröffentlichungsnummer: WO 2015/110434

(56) Entgegenhaltungen:
- DD-A1- 257 420
- IT-B- 1 124 464
- US-A- 4 599 027
- US-B1- 7 322 786

## Beschreibung

Die Erfindung betrifft einen Stapelkran zur Handhabung von Containern, insbesondere von ISO-Containern, mit mindestens einem horizontalen Querträger, der in einer Kranfahrtrichtung verfahrbar ist und an dem eine Krankatze entlang und quer zur Kranfahrtrichtung verfahrbar ist, mit einem an der Krankatze aufgehängten und heb- und senkbaren Lastaufnahmemittel für einen Container, wobei an dem Stapelkran mindestens ein Zwischenlagerplatz für mindestens einen Container angeordnet ist, der Zwischenlagerplatz von dem Lastaufnahmemittel erreichbar ist und gemeinsam mit dem Stapelkran in Kranfahrtrichtung verfahrbar ist. Auch betrifft die Erfindung ein Containerlagersystem mit einem Stapelkran und einem Containerlager.

Stapelkrane werden für den Umschlag von normierten Ladungsträgern, insbesondere ISO-Containern, eingesetzt, insbesondere im Rahmen der Bewirtschaftung von Containerlagern und dem hierbei erfolgenden Einlagern beziehungsweise Auslagern von Containern in das Containerlager beziehungsweise aus dem Containerlager. Somit unterscheiden sich entsprechende Stapelkrane von Containerbrücken zum Laden und Löschen eines Schiffs, die die Container zwischen dem Schiff und dem Hafenkai transportieren, ohne jedoch die Container in das Containerlager einzulagern oder auszulagern. Als Portalkran ausgebildet, übergreift der Stapelkran seinen Arbeitsbereich in Form eines Containerlagers. Er ist mittels Fahrwerken auf zwei parallelen Fahrbahnen, beispielsweise Schienen, linear verfahrbar, auf denen er sich mit vier aufrechten Stützen abstützt. An die Stützen verbindenden, die Container horizontal überspannenden Querträgern ist ein Katzfahrwerk linear verfahrbar. An dem Katzfahrwerk ist ein einteiliger starrer Mast aufgehängt, der in Hub- und Senkrichtung vertikal verfahrbar ist und an dessen unteren Ende ein Lastaufnahmemittel für Container angehängt ist. Ein solcher Stapelkran ist beispielsweise in dem deutschen Patent DE 10 2008 061 199 B3 beschrieben.

Der Stapelkran überspannt das Containerlager mit mehreren Reihen nebeneinander und übereinander stapelbarer Container. Die Spannweite des Portals eines solchen Stapelkranes wird durch die Frequenz bei der Ein- und Auslagerung sowie die Verweildauer von Containern im Lager bestimmt; sie kann in einer 1-über-5-Lösung zwischen 8 und 11 Containern betragen und ermöglicht eine wirtschaftliche Lagerung mit hoher Dichte, maximaler Platzausnutzung bei guter Sortierung und kurzen Zugriffzeiten.

Derartige Stapelkrane werden zum Intermodalumschlag in Bahnterminals zwischen Schiene und Straße, zum Trimodalumschlag in Fracht-Terminals zwischen Schiff, Güterzug und LKW und zur Handhabung in Containerlagern im manuellen, teilautomatischen oder automatischen Betrieb verwendet. Da in der Regel wenig Fläche für die Lagerung von Containern zur Verfügung steht, ermöglichen sie mit den großen Spannweiten der Portale die Bewirtschaftung von Lagermodulen mit großer Lagerkapazität. Die Stapelkrane werden, je nach Größe und Einsatzbereich, in reiner Kastenbauweise oder einer Kombination von Fachwerk- und Kastenbauweise ausgeführt. Sie weisen dadurch bei großen Bauhöhen eine hohe Biegesteifigkeit auf und ermöglichen, auch bei starkem Wind, einen sicheren Betrieb.

Neben der geforderten maximalen Platzausnutzung kommt der Produktivität des Containerlagerbetriebs eine zentrale Bedeutung zu. Diese ist wiederum maßgeblich abhängig von den Ein- und Auslagerungszeiten der Container und den Transportzeiten der Container von und zu den Zielorten. In modernen Containerterminals werden heute zunehmend teil- oder vollautomatisierte Stapelkrane eingesetzt, die mit optimierten Ablaufsteuerungen betrieben werden. Automatisierten Stapelkrane, die unter der abgekürzten Bezeichnung ASC (Automated Stacking Cranes) bekannt sind, erfüllen bereits weitgehend die Anforderungen an eine gute Produktivität und bilden im Hafenumschlag, unter Einbindung herkömmlicher wasser- und landseitiger Fahrzeuge, gute integrierte Systemlösungen.

Da der weltweite Containerverkehr stetig wächst und das Frachtaufkommen, die Schiffe und das Umschlagvolumen immer größer werden, muss auch der Leistungszuwachs bestehender und neuer Terminals angepasst werden, um mit dem Wachstum Schritt zu halten. Es besteht somit ein zunehmender Bedarf nach innovativen Containerumschlaggeräten und Systemen mit hohen Umschlagleistungen und großen Arbeitsgeschwindigkeiten.

Aus der Patenschrift DD 257 420 A1 ist ein Stapelkran in Portalbauweise bekannt, der an den Stützen seines Portals jeweils einen Zwischenlagerplatz für mehrere Container aufweist. Die Zwischenlagerplätze sind im Bereich der jeweiligen unteren Stützenenden oberhalb der Fahrwerke des Stapelkrans angeordnet. Mit ihren Abstellflächen für die Container erstrecken sich die Zwischenlagerplätze horizontal. Hierbei ragen die Zwischenlagerplätze nach innen in Richtung der gegenüberliegenden Stützen und nach außen über die Stützen hinaus, so dass die Fahrspur des Stapelkrans der Breite der Zwischenlagerplätze entspricht.

Die Aufgabe der vorliegenden Erfindung besteht darin, einen Stapelkran so zu verbessern, dass dessen Arbeitsbereich vergrößert und hierdurch die Umschlagleistung erhöht und damit eine Steigerung der Produktivität des Containerlagersystems erreicht wird.

Die Aufgabe wird durch einen Stapelkran mit den Merkmalen des Anspruches 1 gelöst. Vorteilhafte Ausgestaltungen des Stapelkrans sind in den Ansprüchen 2 bis 9 angegeben.

Erfindungsgemäß wird bei einem Stapelkran zur Handhabung von Containern, insbesondere von ISO-Containern, mit mindestens einem horizontalen Querträger, der in einer Kranfahrtrichtung verfahrbar ist und an dem eine Krankatze entlang und quer zur Kranfahrtrichtung verfahrbar ist, mit einem an der Krankatze aufgehängten und heb- und senkbaren Lastaufnahmemittel für einen Container, wobei an dem Stapelkran mindestens ein Zwischenlagerplatz für mindestens einen Container angeordnet ist, der Zwischenlagerplatz von dem Lastaufnahmemittel erreichbar ist und gemeinsam mit dem Stapelkran in Kranfahrtrichtung verfahrbar ist, ein vergrößerter Arbeitsbereich dadurch erreicht, dass der Zwischenlagerplatz derart ausgebildet ist, dass der Zwischenlagerplatz zwischen einer aktiven Stellung, in der ein Container aufnehmbar ist, und einer passiven Stellung, in der kein Container aufnehmbar ist, bewegbar ist.

Dadurch, dass der Zwischenlagerplatz zwischen einer aktiven Stellung zur Aufnahme eines Containers und einer passiven Stellung bewegbar ist, in der kein Container aufnehmbar und der Zwischenlagerplatz nicht von dem Lastaufnahmemittel erreichbar ist, kann der Zwischenlagerplatz in der passiven Stellung so positioniert werden, dass er beziehungsweise seine Abstellfläche von dem Lastaufnahmemittel nicht mehr so angefahren werden kann, dass ein Container auf der Abstellfläche des Zwischenlagerplatzes abgestellt werden kann. Auf diese Weise wird der Zwischenlagerplatz aus dem Arbeitsbereich des Stapelkrans beziehungsweise Lastaufnahmemittels entfernt, wodurch sich der Arbeitsbereich beziehungsweise dessen Zugänglichkeit vergrößert. Diese Funktion ist wichtig, da ein auf dem Zwischenlagerplatz abgestellter Container oder auch ein in der aktiven Stellung befindlicher Zwischenlagerplatz ohne Container den Verfahrweg der Krankatze beziehungsweise des Lastaufnahmemittels entlang des Querträgers einschränkt und die Reihe von Containern im Containerlager unterhalb des in die aktive Stellung bewegten Zwischenlagerplatzes nicht mehr von dem Stapelkran beziehungsweise dessen Lastaufnahmemittel erreicht werden kann, da der Container und auch der Zwischenlagerplatz ein Absenken des Lastaufnahmemittels behindert. Dadurch, dass der Zwischenlagerplatz aus der aktiven Stellung in die passive Stellung bewegbar ist, kann der Stapelkran wie ein üblicher Stapelkran betrieben werden und alle Container in dem Containerlager erreichen. Dadurch ist auch ein besonders geringer Abstand zwischen den abgestellten äußeren Containern des Containerlagers und den Stützen des Stapelkrans möglich, wodurch sich der Arbeitsbereich in vorteilhafter Weise erhöht. Durch den Zwischenlagerplatz kann es erforderlich sein, dass vor der Aufnahme der Container auch ein Umlagerungsschritt erforderlich ist, insgesamt jedoch Verfahrweg eingespart wird.

Der Zwischenlagerplatz ist hierbei fest mit dem Stapelkran verbunden und mit diesem in Kranfahrtrichtung verfahrbar. Durch diese konstruktiv einfach zu verwirklichende Lösung gelingt es, die Produktivität des Stapelkrans beziehungsweise des Containerlagersystems deutlich zu erhöhen, da Leerfahrten des Stapelkran erspart und Wege verkürzt werden können. So kann der Stapelkran bereits Container an dem Zwischenlagerplatz aufnehmen, die für Ziele bestimmt sind, die in der gefahrenen Richtung des Kranes liegen. Zumindest kann somit das Containerlager in einer den Umschlag begünstigenden Weise reorganisiert werden. Der Stapelkran muss für den zusätzlich aufgenommenen und auf dem Zwischenlagerplatz deponierten Container nicht noch einmal in einer Leerfahrt den Weg zurück fahren, sondern entnimmt den bereits mitgeführten Container direkt dem Zwischenspeicherplatz. Durch eingesparte Fahrten wird zudem auch die Umwelt geschont, weil weniger Energie verbraucht wird. Da derartige Stapelkrane zumeist im Automatikbetrieb und zusammen mit einem Lagerverwaltungsrechner arbeiten, können somit die Container vorausschauend mit Hilfe des Zwischenlagerplatzes an logistisch günstige Orte innerhalb des Containerlagers verbracht werden.

Im Zusammenhang der vorliegenden Erfindung werden unter ISO-Containern genormte Großraum- beziehungsweise Seefrachtcontainer verstanden, die im internationalen Warenverkehr zum Einsatz kommen. Am weitesten verbreitet sind ISO-Container mit einer Breite von 8 Fuß und einer Länge von 20, 40 oder 45 Fuß.

Konstruktiv vorteilhaft ist vorgesehen, dass der Zwischenlagerplatz zwischen der aktiven Stellung und der passiven Stellung um eine horizontale Achse schwenkbar ist. Hierdurch kann der Zwischenlagerplatz besonders einfach aus dem Arbeitsbereich des Stapelkrans beziehungsweise des Lastaufnahmemittels entfernt werden.

Insbesondere ist vorgesehen, dass der Zwischenlagerplatz unterhalb und in der Nähe des Querträger in der Weise angeordnet ist, dass von dem Lastaufnahmemittel gerade ein Container bezogen auf dessen Höhe auf dem Zwischenlagerplatz abstellbar ist. Somit können in dem Containerlager die Container in der vorgesehenen Höhe gestapelt werden und ein Stapelkran kann mit aufgenommenen Container über das Containerlager hinweg fahren.

Vorteilhafter Weise ist der Zwischenlagerplatz am Ende des Querträgers und somit am Rand des Containerlagers angeordnet. Somit wird die Handhabung der Container beziehungsweise der Arbeitsbereich am wenigsten beschränkt, da in der aktiven Stellung des Zwischenlagerplatzes nur eine Reihe der Container nicht von dem Lastaufnahmemittel erreicht werden kann.

In einer bevorzugten Ausführungsform ist der Stapelkran brücken- oder portalartig aufgebaut.

Vorteilhafter Weise können an dem Stapelkran mehrere Zwischenlagerplätze angeordnet sind. Beispielsweise zwei an gegenüber liegenden Enden des Querträgers.

Vorzugsweise ist der Stapelkran in Portalbauweise ausgebildet, der mindestens eine horizontale Querträger über mehrere aufrechte Stützen getragen und der mindestens eine Zwischenlagerplatz an mindestens einer der Stützen angeordnet.

Vorteilhafter Weise kann das Lastaufnahmemittel über einen starren und einteiligen Mast an der Krankatze geführt sein.

Besonders geeignet ist der vorbeschriebene Stapelkran für ein Containerlagersystem mit einem Stapelkran, in dem in einem unterhalb des Stapelkranes angeordneten Containerlager Container in Reihen neben- und übereinander und in Kranfahrtrichtung hintereinander gestapelt sind, der Querträger das Containerlager überspannt und der Zwischenlagerplatz an dem Stapelkran in einem Bereich oberhalb einer maximal vorgesehenen Containerstapelhöhe des Containerlagers angeordnet ist. Um die Fahrten des Stapelkranes möglichst geringfügig zu behindern, ist der Zwischenlagerplatz an dem Stapelkran in einem Bereich oberhalb der maximal vorgesehenen Containerstapelhöhe des Containerlagers angeordnet. Da der Zwischenlagerplatz nach innen auskragt, werden Kollisionen mit den Containerstapeln sicher vermieden. Das gelingt, da der Zwischenlagerplatz in einer Höhe oberhalb des zu oberst gestapelten Containers vorgesehen ist, oder die Stapelhöhe der Container im Fahrbereich des mit dem Stapelkran verfahrbaren Zwischenlagerplatzes vermindert ist.

Im Übrigen sorgt die intelligente Steuerung des Stapelkranes unter Berücksichtigung der Fahrprofile des Stapelkranes für ein kollisionsfreies Stapeln und Beladen mit Containern.

Die Erfindung ist vielfältig einsetzbar. So kann mit dem erfindungsgemäßen Stapelkran bereits während des Ein- oder Auslagerns eines Containers aus dem oder in das Containerlager mindestens ein weiterer Container auf dem erfindungsgemäßen Zwischenlagerplatz bereitgestellt und mit dem Stapelkran verfahren werden. Auf diese Weise kann der Fahrweg mindestens verkürzt werden oder sogar eine Leerfahrt des Stapelkranes eingespart werden. Zur Vermeidung von Kollisionen mit belegten Stapelplätzen oder Geräten ist die Belegung des Zwischenlagerplatzes in die Steuerung des Stapelkranes einzubeziehen.

Die einfach anmutende Lösung der Erfindung erhöht mit einfachen Mitteln die Produktivität eines Containerlagersystems. Die verkürzte Transportzeit erhöht den Durchsatz und die Frequenz der Ein- und Auslagerung. Die eingesparte Energie kommt den Umweltschutz-Forderungen der Betreiber bei der Genehmigung von Containerterminals entgegen und spart dem Betreiber Betriebskosten.

Die Erfindung wird nachfolgend anhand eines in einer Zeichnung dargestellten Ausführungsbeispiels näher erläutert. Es zeigen:
Figur 1 in schematischer Darstellung einen Stapelkran in Portalbauweise nach der Erfindung und
Figur 2 den Stapelkran nach Figur 1 in einer Seitenansicht.

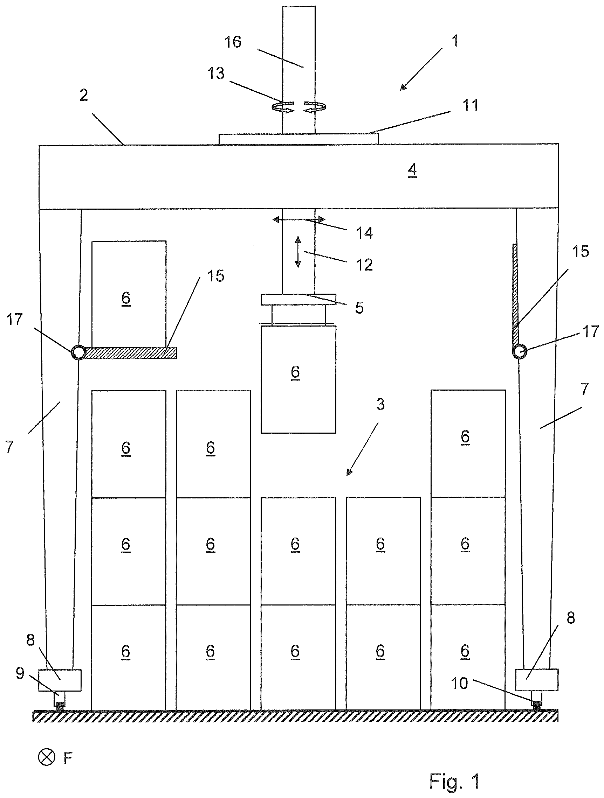

In der Figur 1 ist ein Stapelkran 1 dargestellt, der im Wesentlichen aus einem portalartigen Rahmen 2, insbesondere Kastenrahmen, der ein Containerlager 3 überspannt, besteht. Der Rahmen 2 ist im Wesentlichen aus zwei mit Abstand und parallel zueinander verlaufenden, horizontalen und brückenartigen Querträgern 4 aufgebaut, die sich auf vertikalen Stützen 7 abstützen. An den Querträgern 4 ist ein Lastaufnahmemittel 5, vorzugsweise ein sogenannter Spreader für Container 6, über einen sich vertikal erstreckenden Mast 16 an einer Krankatze 11 aufgehängt. Die beiden Querträger 4, von denen nur der vordere in der Figur 1 erkennbar ist, sind zur Bildung des Rahmens 2 in Portalform von vier aufrechten Stützen 7 getragen, von denen ebenfalls nur die vorderen Stützen in der Figur 1 zu sehen sind. Die Stützen 7 sind, jeweils auf einer Seite des Containerlagers 3, in ihrem unteren Bereich durch einen Fahrrahmen 8 verbunden, der Fahrwerke 9 des Stapelkrans 1 aufnimmt. Mit den Fahrwerken 9 ist der Stapelkran 1 auf Schienen 10 in einer Kranfahrtrichtung F verfahrbar, wobei die Schienen 10 beidseitig des Containerlagers 3 parallel zueinander, in Kranfahrtrichtung F und somit in der Figur 1 senkrecht zur Zeichnungsebene verlaufen. Das Lastaufnahmemittel 5 ist an dem Katzfahrwerk 11 aufgehängt; das Katzfahrwerk 11 ist an den Querträgern 4 und entlang der Querträger 4 verfahrbar. Über das Lastaufnahmemittel 5 ist ein Heben und Senken 12 und ein Drehen 13 der am Lastaufnahmemittel 5 angeschlagenen Container 6 möglich. Über die Krankatze 11 ist ein seitliches Verfahren der Container 6 in einer Verfahrrichtung 14 längs der Querträger 4 und über die Fahrwerke 9 ein Verfahren in Richtung der in Kranfahrtrichtung F verlaufenden Schienen 10 möglich. Auf diese Weise kann von dem Lastaufnahmemittel 5 entlang seines Verfahrweges jeder Bereich unterhalb des Stapelkranes 1 erreicht und bedient werden, um einen Container 6 in diesem Arbeitsbereich unterhalb der Querträger 4 und zwischen den Stützen 7 aufnehmen oder abstellen zu können.

In der Figur 1 ist in der linken oberen Ecke des Stapelkranes 1 und somit an dem linken Ende des Querträgers 4 ein erster Zwischenlagerplatz 15 für einen Container 6 dargestellt, der seitlich an den beiden hintereinander angeordneten Stützen 7 örtlich fest aber klappbar angeordnet ist. Der Zwischenlagerplatz 15 ist zwischen einer aktiven Stellung zur Aufnahme eines Containers 6 in eine passive Stellung um eine horizontale Achse 17 schwenkbar, in der kein Container 6 aufnehmbar und der Zwischenlagerplatz 15 nicht von dem Lastaufnahmemittel 5 erreichbar ist. Der Zwischenlagerplatz 15 ist geeignet, einen Container 6 aufzunehmen und ist entsprechend dimensioniert. Hierbei erstreckt sich der Zwischenplatz 15 mit seiner Abstellfläche für den aufzunehmenden Container 6 in der aktiven Stellung im Wesentlichen horizontal und parallel zum Querträger 4 in Richtung der gegenüberliegenden Stützen 7, so dass wie in Figur 1 dargestellt ein Container 6 auf dem ersten Zwischenlagerplatz 15 abgestellt werden kann. Dadurch ragt der Zwischenlagerplatz 15 in der aktiven Stellung in den Arbeitsbereich des Lastaufnahmemittels 5 hinein, so dass die Container 6 der äußeren linken und unmittelbar neben den Stützen 7 angeordneten Containerreihe von dem Lastaufnahmemittel 5 nicht erreichbar sind.

In gleicher Weise ist in Figur 1 im Bereich des gegenüberliegenden rechten Endes der beiden Querträger 4 ein zweiter Zwischenlagerplatz 15 vorgesehen, der ebenfalls an den zugehörigen Stützen 7 angeordnet ist. Der zweite Zwischenlagerplatz 15 ist in der passiven Stellung dargestellt, in der sich die Abstellfläche des Zwischenlagerplatzes 15 im Wesentlichen vertikal und parallel zu den Stützen 7 sowie an den Stützen 7 anliegend erstreckt. Dadurch sind die Container 6 der unmittelbar neben den rechten Stützen 7 angeordneten Containerreihe für das Lastaufnahmemittel 5 erreichbar. Hierfür wurde der zweite Zwischenlagerplatz 15 um die horizontale Achse 17 um etwa 90 Grad nach oben geschwenkt. Dadurch, dass sich der zweite Zwischenlagerplatz 15 mit seiner Abstellfläche in der passiven Stellung nicht mehr horizontal in den Arbeitsbereich des Lastaufnahmemittels 5 hinein erstreckt, ist der zweite Zwischenlagerplatz 15 in der passiven Stellung von dem Lastaufnahmemittel 5 nicht mehr so erreichbar, dass ein Container 6 auf dem zweiten Zwischenlagerplatz 15 abgestellt werden kann. Um einen Container 6 aufnehmen zu können, muss der Zwischenlagerplatz 15 wieder in die aktive Stellung bewegt werden.

Die Anordnung der beiden Zwischenlagerplätze 15 am Stapelkran 1 ist so gewählt, dass das Lastaufnahmemittel 5 in einer oberen Stellung den Container 6 auf einem in der aktiven Stellung befindlichen Zwischenlagerplatz 15 absetzen und von diesem aufnehmen kann. Gleichzeitig sind die Zwischenlagerplätze 15 aber in einer solchen Höhe angeordnet, dass die Zwischenlagerplätze 15 in der aktiven Stellung beim Verfahren des Stapelkranes 1 auf den Schienen 10 nicht mit den im Containerlager 3 gestapelten Containern 6 kollidieren. Wie dargestellt, sind die Container 6 im Ausführungsbeispiel in fünf Reihen nebeneinander und in drei Reihen übereinander gestapelt; in der Praxis sind Stapelhöhen von fünf bis sechs Containern in bis zu 11 Reihen nicht unüblich. Jeder Zwischenlagerplatz 15 ist somit im Bereich oberhalb des Containerlagers 3 angeordnet, in dem von dem Stapelkran 1 die Container 6 verfahren werden.

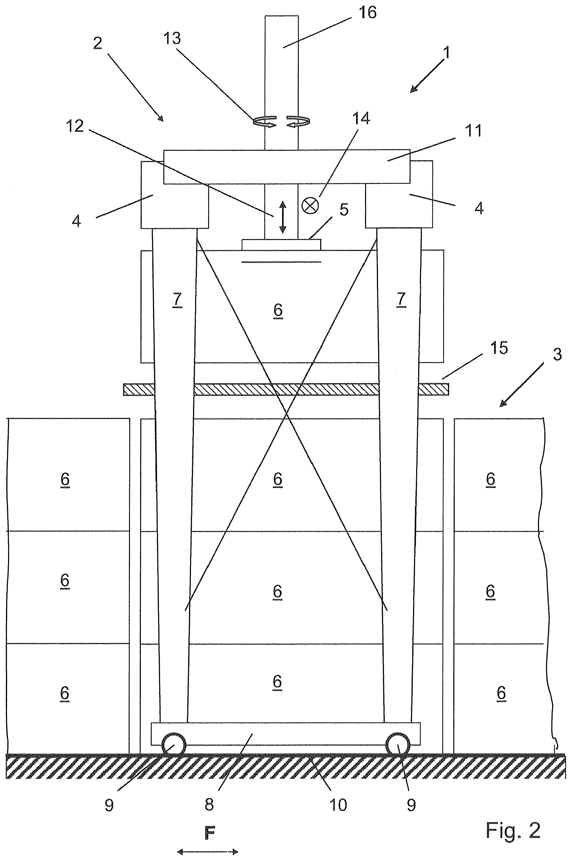

In Figur 2 ist der Stapelkran 1 in der Seitenansicht dargestellt. Es ist eine schematisch dargestellte Krankatze 11 mit dem heb- und senkbaren sowie um die senkrechte Achse drehbaren starren einteiligen Mast 16 erkennbar. Der Mast 16 wird über nicht dargestellte und an der Krankatze 11 angeordnete Seilwinden in Hub- und Senkrichtung 12 bewegt. Die Krankatze 11 ist an den beiden Querträgern 4 des Stapelkranes 1 senkrecht zur Zeichnungsebene verfahrbar. Ebenfalls erkennbar sind die beiden, dem Betrachter zugewandten vorderen der vier Stützen 7 des Stapelkranes, die eine Seite des sich über dem Containerlager 3 erstreckenden portalartigen Rahmens 2 bilden. Die Stützen 7 sind an ihren unteren Enden mit dem Fahrrahmen 8 verbunden, an dem wie angedeutet das Fahrwerk 9 angeordnet ist, das auf den sich in Fahrtrichtung F erstreckenden Schienen 10 den Stapelkran 1 verfährt. Im oberen Bereich des Stapelkranes 1 ist einer der Zwischenlagerplätze 15 für einen Container 6 durch Schraffur kenntlich gemacht. Der auf diesem in der aktiven Stellung befindlichen Zwischenlagerplatz 15 abzusetzende Container 6 wurde von dem Lastaufnahmemittel 5 in eine obere Stellung angehoben und wird anschließend auf dem Zwischenlagerplatz 15 abgesetzt, so dass das Lastaufnahmemittel 5 frei ist für weitere Verladearbeiten anderer Container 6. Indes ruht der Container 6 beim Verfahren des Stapelkranes 1 auf dem Zwischenlagerplatz 15 und wird mittels des Stapelkranes 1 in die Nähe seines Bestimmungsortes transportiert, der aus einer intelligenten Ablaufsteuerung aller Container 6 optimiert ermittelt wurde. Dort angekommen kann der Container 6 über das Lastaufnahmemittel 5 von dem Zwischenlagerplatz 15 aufgenommen und dem ihm benachbarten Ziel zugeführt werden.

Der Zwischenlagerplatz 15 ist so ausgebildet, dass ein oder zwei 20-Fuß-Container, ein 40-Fuß-Container oder ein 45-Fuß-Container darauf abgestellt werden können.

Die vorliegende Erfindung ist vorstehend im Zusammenhang mit einem automatisch arbeitenden und portalartigen Stapelkran 1 beschrieben worden, der auf Schienen 10 verfahrbar ist. Grundsätzlich ist die Erfindung auch bei portalartigen und auf Gummireifen verfahrbaren Stapelkranen einsetzbar. Eine brückenartige Ausgestaltung der Stapelkrane mit aufgeständerten Schienen ist auch denkbar. Dann ist der Zwischenlagerplatz 15 an dem Querträger 4 aufgehängt. Außerdem können die Stapelkrane auch teilautomatisch oder manuell betrieben werden.

### Bezugszeichenliste:

- 1: Stapelkran
- 2: Rahmen
- 3: Containerlager
- 4: Querträger
- 5: Lastaufnahmemittel
- 6: Container
- 7: Stützen
- 8: Fahrrahmen
- 9: Fahrwerk
- 10: Schienen
- 11: Krankatze
- 12: Hub-und Senkrichtung
- 13: Drehrichtung
- 14: Verfahrrichtung
- 15: Zwischenlagerplatz
- 16: Mast
- 17: Achse

- F: Kranfahrtrichtung

## Patentansprüche

1. Stapelkran (1) zur Handhabung von Containern (6), insbesondere von ISO-Containern, mit mindestens einem horizontalen Querträger (4), der in einer Kranfahrtrichtung (F) verfahrbar ist und an dem eine Krankatze (11) entlang und quer zur Kranfahrtrichtung (F) verfahrbar ist, mit einem an der Krankatze (11) aufgehängten und heb- und senkbaren Lastaufnahmemittel (5) für einen Container (6), wobei an dem Stapelkran (1) mindestens ein Zwischenlagerplatz (15) für mindestens einen Container (6) angeordnet ist, der Zwischenlagerplatz (15) von dem Lastaufnahmemittel (5) erreichbar ist und gemeinsam mit dem Stapelkran (1) in Kranfahrtrichtung (F) verfahrbar ist, **dadurch gekennzeichnet, dass** der Zwischenlagerplatz (15) derart ausgebildet ist, dass der Zwischenlagerplatz (15) zwischen einer aktiven Stellung, in der ein Container (6) aufnehmbar ist, und einer passiven Stellung, in der kein Container (6) aufnehmbar ist, bewegbar ist.

2. Stapelkran (1) nach Anspruch 1, **dadurch gekennzeichnet, dass** der Zwischenlagerplatz (15) zwischen der aktiven Stellung und der passiven Stellung um eine horizontale Achse (17) schwenkbar ist.

3. Stapelkran (1) nach Anspruch 1 oder 2, **dadurch gekennzeichnet, dass** der Zwischenlagerplatz (15) unterhalb und in der Nähe des Querträgers (4) in der Weise angeordnet ist, dass von dem Lastaufnahmemittel (5) zumindest ein Container (6) auf dem Zwischenlagerplatz (15) abstellbar ist.

4. Stapelkran (1) nach einem der Ansprüche 1 bis 3, **dadurch gekennzeichnet, dass** der Zwischenlagerplatz (15) am Ende des Querträgers (4) angeordnet ist.

5. Stapelkran (1) nach einem der Ansprüche 1 bis 4, **dadurch gekennzeichnet, dass** der Stapelkran (1) brücken- oder portalartig aufgebaut ist.

6. Stapelkran (1) nach einem der Ansprüche 1 bis 5, **dadurch gekennzeichnet, dass** an dem Stapelkran (1) mehrere Zwischenlagerplätze (15) angeordnet sind.

7. Stapelkran (1) nach einem der Ansprüche 1 bis 6, **dadurch gekennzeichnet, dass** der Stapelkran (1) in Portalbauweise ausgebildet ist, der mindestens eine horizontale Querträger (4) über mehrere aufrechte Stützen (7) getragen ist und der mindestens eine Zwischenlagerplatz (15) an mindestens einer der Stützen (7) angeordnet sind.

8. Stapelkran (1) nach einem der Ansprüche 1 bis 7, **dadurch gekennzeichnet, dass** das Lastaufnahmemittel (5) über einen starren und einteiligen Mast (16) an der Krankatze (11) geführt ist.

9. Containerlagersystem mit einem Stapelkran (1) nach einem der vorhergehenden Ansprüche 1 bis 8, **dadurch gekennzeichnet, dass** in einem unterhalb des Stapelkranes (1) angeordneten Containerlager (3) Container (6) in Reihen neben- und übereinander und in Kranfahrtrichtung (F) hintereinander gestapelt sind, der Querträger (4) das Containerlager (3) überspannt und der Zwischenlagerplatz (15) an dem Stapelkran (1) in einem Bereich oberhalb einer maximal vorgesehenen Containerstapelhöhe des Containerlagers (3) angeordnet ist.

## Claims

1. Stacking crane (1) for handling containers (6), in particular ISO containers, having at least one horizontal transverse girder (4), which can travel in a crane travel direction (F) and along which a crane trolley (11) can travel in and transverse to the crane travel direction (F), having a load picking-up means (5) for a container (6),which load picking-up means (5) is suspended on the crane trolley (11) and can be raised and lowered, wherein at least one intermediate storage area (15) for at least one container (6) is disposed on the stacking crane (1), the intermediate storage area (15) can be reached by the load picking-up means (5) and can travel together with the stacking crane (1) in the crane travel direction (F), **characterised in that** the intermediate storage area (15) is designed in such a way that the intermediate storage area (15) can move between an active position in which a container (6) can be picked up, and a passive position in which no container (6) can be picked up.

2. Stacking crane (1) as claimed in claim 1, **characterised in that** the intermediate storage area (15) is able to pivot about a horizontal axis (17) between the active position and the passive position.

3. Stacking crane (1) as claimed in claim 1 or 2, **characterised in that** the intermediate storage area (15) is disposed below and in the proximity of the transverse girder (4) in such a manner that at least one container (6) can be set down on the intermediate storage area (15) by the load picking-up means (5).

4. Stacking crane (1) as claimed in any one of claims 1 to 3, **characterised in that** the intermediate storage area (15) is disposed at the end of the transverse girder (4).

5. Stacking crane (1) as claimed in any one of claims 1 to 4, **characterised in that** the stacking crane (1) is formed in a bridge or gantry-like manner.

6. Stacking crane (1) as claimed in any one of claims 1 to 5, **characterised in that** a plurality of intermediate storage areas (15) are disposed on the stacking crane (1).

7. Stacking crane (1) as claimed in any one of claims 1 to 6, **characterised in that** the stacking crane (1) is formed in a gantry construction, the at least one horizontal transverse girder (4) is supported via a plurality of upright supports (7) and the at least one intermediate storage area (15) is disposed on at least one of the supports (7).

8. Stacking crane (1) as claimed in any one of claims 1 to 7, **characterised in that** the load picking-up means (5) is guided via a rigid one-piece mast (16) on the crane trolley (11).

9. Container storage system having a stacking crane (1) as claimed in any one of the preceding claims 1 to 8, **characterised in that** in a container store (3) disposed below the stacking crane (1), containers (6) are stacked in rows next to and above one another and behind one another in the crane travel direction (F), the transverse girder (4) straddles the container store (3) and the intermediate storage area (15) is disposed on the stacking crane (1) in a region above a maximum provided container stacking height of the container store (3).

## Revendications

1. Grue empileuse (1) destinée à la manutention de conteneurs (6), notamment de conteneurs ISO, comprenant au moins une poutre transversale horizontale (4) qui est mobile dans une direction de déplacement de grue (F) et sur laquelle un chariot de grue (11) est mobile longitudinalement et transversalement à la direction de déplacement de grue (F), un moyen de réception de charge (5) relevable et abaissable qui est suspendu au chariot de grue (11) et qui est destiné à un conteneur (6), au moins un emplacement de stockage intermédiaire (15) destiné à au moins un conteneur (6) étant disposé au niveau de la grue empileuse (1), l'emplacement de stockage intermédiaire (15) étant accessible par le moyen de réception de charge (5) et étant mobile conjointement avec la grue empileuse (1) dans la direction de déplacement de grue (F), **caractérisée en ce que** l'emplacement de stockage intermédiaire (15) est conçu de telle sorte que l'emplacement de stockage intermédiaire (15) est mobile entre une position active, dans laquelle un conteneur (6) peut être reçu, et une position passive dans laquelle aucun conteneur (6) ne peut être reçu.

2. Grue empileuse (1) selon la revendication 1, **caractérisée en ce que** l'espace intermédiaire de stockage (15) est pivotant sur un axe horizontal (17) entre la position active et la position passive.

3. Grue empileuse (1) selon la revendication 1 ou 2, **caractérisée en ce que** l'emplacement de stockage intermédiaire (15) est disposé au-dessous et au voisinage de la poutre transversale (4) de telle manière qu'au moins un conteneur (6) peut être rangé sur l'espace de stockage intermédiaire (15) par le moyen de réception de charge (5).

4. Grue empileuse (1) selon l'une des revendications 1 à 3, **caractérisée en ce que** l'espace de stockage intermédiaire (15) est disposé à l'extrémité de la poutre transversale (4).

5. Grue empileuse (1) selon l'une des revendications 1 à 4, **caractérisée en ce que** la grue empileuse (1) est réalisée sous la forme d'un pont ou d'un portique.

6. Grue empileuse (1) selon l'une des revendications 1 à 5, **caractérisée en ce que** plusieurs emplacements de stockage intermédiaires (15) sont disposés au niveau de la grue-empileuse (1).

7. Grue empileuse (1) selon l'une des revendications 1 à 6, **caractérisée en ce que** la grue empileuse (1) est réalisée sous la forme d'un portique, **en ce que** l'au moins une poutre transversale horizontale (4) est supportée par une pluralité de montants (7) et **en ce que** l'au moins un emplacement de stockage intermédiaire (15) est disposé au niveau d'au moins un des supports (7).

8. Grue empileuse (1) selon l'une des revendications 1 à 7, **caractérisée en ce que** le moyen de réception de charge (5) est guidé sur le chariot de grue (11) par un mât rigide monobloc (16).

9. Système de stockage de conteneurs comportant une grue empileuse (1) selon l'une quelconque des revendications précédentes 1 à 8, **caractérisé en ce que** des conteneurs (6) sont empilés dans un lieu de stockage de conteneurs (3), disposé au-dessous de la grue empileuse (1), les uns derrière les autres dans la direction de déplacement de grue (F) en étant superposés et juxtaposés en rangées, **en ce que** la poutre transversale (4) enjambe le lieu de stockage de conteneur (3) et **en ce que** l'emplacement de stockage intermédiaire (15) est disposé au niveau de la grue empileuse (1) dans une zone située au-dessus de la hauteur d'empilage de conteneurs maximale prévue du lieu de stockage de conteneurs (3).
